# EUROPÄISCHE PATENTANMELDUNG

(11) **EP 4 064 539 A2**
(43) Veröffentlichungstag der Anmeldung: **28.09.2022**
(21) Anmeldenummer: 22157630.9
(22) Anmeldetag: 18.02.2022
(51) Int. Cl.: H02M 1/32, H02M 7/5387, H02M 7/797, H02M 1/00, H02M 1/08, H02M 1/36

(54) **PULSWECHSELRICHTERANORDNUNG UND VERFAHREN ZUM BETREIBEN EINER PULSWECHSELRICHTERANORDNUNG**

(30) Priorität: 25.03.2021 DE 102021202914
(71) Anmelder: VOLKSWAGEN AG, 38440 Wolfsburg (DE)
(72) Erfinder: Schmäling, Jan, 34346 Hann. Münden (DE); Arnaout, Samy, 34305 Niedenstein (DE); Novotny, Markus, 34289 Zierenberg (DE); Kertes, Marko, 81379 München (DE)

(57) **Zusammenfassung**

Die Erfindung betrifft eine Pulswechselrichteranordnung (1), umfassend einen positiven Hochspannungseingang (2+) zum Versorgen einer Plusleitung (3+), einen negativen Hochspannungseingang (2-) zum Versorgen einer Minusleitung (3-), einen Pulswechselrichter (4) zum Bereitstellen mindestens einer Wechselspannung aus einer über die Leitungen (3+,3-) bereitgestellten Gleichspannung, mindestens eine Widerstandsanordnung (6) zwischen der Plusleitung (3+) und der Minusleitung (3-) mit mindestens einem Widerstand (Rx), wobei die mindestens eine Widerstandsanordnung (6) mindestens einen selbstleitenden Halbleiterschalter (7) aufweist, der dazu eingerichtet und derart angeordnet ist, eine über die mindestens eine Widerstandanordnung (6) zwischen der Plusleitung (3+) und der Minusleitung (3-) ausgebildete elektrische Verbindung zu schließen oder zu trennen, und eine Steuereinrichtung (8), wobei die Steuereinrichtung (8) dazu eingerichtet ist, zumindest in einem normalen Betriebszustand den mindestens einen selbstleitenden Halbleiterschalter (7) sperrend zu schalten. Ferner betrifft die Erfindung ein Verfahren zum Betreiben einer Pulswechselrichteranordnung (1).

## Beschreibung

Die Erfindung betrifft eine Pulswechselrichteranordnung und ein Verfahren zum Betreiben einer Pulswechselrichteranordnung.

In Fahrzeugen, insbesondere Elektrofahrzeugen, wird parallel zu einem Pulswechselrichter eine Widerstandskette verbaut. Die Widerstandskette hat das Ziel, einen vorgeschalteten Zwischenkreiskondensator im Notfall, nachdem ein vorgeschaltetes Schütz eine Verbindung zu einer Hochvoltbatterie bereits getrennt hat, in einer vorgegebenen Zeit zu entladen. Weitere Funktionen der Widerstandskette umfassen das Schützen des Zwischenkreiskondensators bei Überspannung und, in Zusammenwirken mit diesem, das Erreichen einer definierten Zeitkonstante beim Be- und Entladen (z.B. τ = 5RC). Ein solches Verhalten kann einen Spannungsanstieg bei auftretenden Impulsen verzögern und einer Steuerungssoftware ausreichend Zeit zum Eingreifen geben.

Der Erfindung liegt die Aufgabe zu Grunde, eine Pulswechselrichteranordnung und ein Verfahren zum Betreiben einer Pulswechselrichteranordnung zu schaffen, bei denen insbesondere eine Energieeffizienz verbessert ist.

Die Aufgabe wird erfindungsgemäß durch eine Pulswechselrichteranordnung mit den Merkmalen des Patentanspruchs 1 und ein Verfahren mit den Merkmalen des Patentanspruchs 10 gelöst. Vorteilhafte Ausgestaltungen der Erfindung ergeben sich aus den Unteransprüchen.

Insbesondere wird eine Pulswechselrichteranordnung geschaffen, umfassend einen positiven Hochspannungseingang zum Versorgen einer Plusleitung, einen negativen Hochspannungseingang zum Versorgen einer Minusleitung, einen Pulswechselrichter zum Bereitstellen mindestens einer Wechselspannung aus einer über die Leitungen bereitgestellten Gleichspannung, mindestens eine Widerstandsanordnung zwischen der Plusleitung und der Minusleitung mit mindestens einem Widerstand, wobei die mindestens eine Widerstandsanordnung mindestens einen selbstleitenden Halbleiterschalter aufweist, der dazu eingerichtet und derart angeordnet ist, eine über die mindestens eine Widerstandanordnung zwischen der Plusleitung und der Minusleitung ausgebildete elektrische Verbindung zu schließen oder zu trennen, und eine Steuereinrichtung, wobei die Steuereinrichtung dazu eingerichtet ist, zumindest in einem normalen Betriebszustand den mindestens einen selbstleitenden Halbleiterschalter sperrend zu schalten.

Ferner wird insbesondere ein Verfahren zum Betreiben einer Pulswechselrichteranordnung zur Verfügung gestellt, wobei mindestens eine Widerstandsanordnung mit mindestens einem Widerstand zwischen einer von einem positiven Hochspannungseingang gespeisten Plusleitung und einer von einem negativen Hochspannungseingang gespeisten Minusleitung betrieben wird, wobei mindestens ein selbstleitender Halbleiterschalter der mindestens einen Widerstandsanordnung zum Schließen oder Trennen einer über die mindestens eine Widerstandanordnung zwischen der Plusleitung und der Minusleitung ausgebildeten elektrischen Verbindung betrieben wird, und wobei der mindestens eine selbstleitende Halbleiterschalter mittels einer Steuereinrichtung der Pulswechselrichteranordnung zumindest in einem normalen Betriebszustand sperrend geschaltet wird.

Die Pulswechselrichteranordnung und das Verfahren ermöglichen es, eine Energieeffizienz in einem normalen Betriebszustand zu erhöhen, da der mindestens eine Widerstand der mindestens einen Widerstandsanordnung von den Leitungen getrennt wird, sodass kein Strom über den mindestens einen Widerstand fließen kann. Hierdurch kann das Auftreten einer Verlustleistung verhindert werden. Dies wird dadurch erreicht, dass die Widerstandsanordnung mindestens einen selbstleitenden Halbleiterschalter aufweist. Der mindestens eine selbstleitende Halbleiterschalter dient dazu, eine über die mindestens eine Widerstandsanordnung zwischen der Plusleitung und der Minusleitung ausgebildete elektrische Verbindung zu schließen oder zu trennen. Gesteuert wird der mindestens eine selbstleitende Halbleiterschalter mittels einer Steuereinrichtung der Pulswechselrichteranordnung. In einem normalen Betriebszustand der Pulswechselrichteranordnung steuert die Steuereinrichtung den mindestens einen selbstleitenden Halbleiterschalter derart an, dass dieser sperrend, das heißt, nichtleitend ist. Im normalen Betriebszustand entsteht also keinerlei Verlustleistung an dem mindestens einen Widerstand der mindestens einen Widerstandsanordnung. Anders ausgedrückt wird keine elektrische Energie ohne weitere Nutzung in Wärme umgewandelt. Tritt jedoch ein Fehler auf, das heißt, befindet sich die Pulswechselrichteranordnung außerhalb des normalen Betriebszustands, so steuert die Steuereinrichtung den mindestens einen selbstleitenden Halbleiterschalter nicht mehr aktiv an, sodass dieser leitend wird und eine elektrische Verbindung zwischen der Plusleitung und der Minusleitung über den mindestens einen Widerstand ausgebildet wird. Der mindestens eine Widerstand kann dann insbesondere dafür eingesetzt werden, einen vorgeschalteten Zwischenkreiskondensator im Notfall, insbesondere nachdem ein vorgeschaltetes Schütz eine Verbindung zu einer Hochvoltbatterie bereits getrennt hat, in einer vorgegebenen Zeit zu entladen. Ferner kann der mindestens eine Widerstand insbesondere den Zwischenkreiskondensator bei Überspannung schützen und, insbesondere in Zusammenwirken mit diesem, eine definierte Zeitkonstante beim Be- und Entladen vorgeben (z.B. τ = 5RC). Ein solches Verhalten kann insbesondere einen Spannungsanstieg bei auftretenden Impulsen verzögern und einer Steuerungssoftware ausreichend Zeit zum Eingreifen geben. Da ein selbstleitender Halbleiterschalter verwendet wird, ist auch bei einem Ausfall der Steuereinrichtung bzw. einem Ausfall der Ansteuerung sichergestellt, dass eine elektrische Verbindung ausgebildet wird.

Durch das Verbessern der Energieeffizienz erlauben es die Pulswechselrichteranordnung und das Verfahren insbesondere ferner, dass eine Batterieladung besser genutzt werden kann. Bei Verwendung in einem Fahrzeug kann hierdurch eine Reichweite erhöht werden.

Die mindestens eine Widerstandsanordnung kann insbesondere mehrere Widerstände, insbesondere in Form einer Widerstandskette, das heißt, in Form von in Reihe geschalteten Widerständen, aufweisen. Beispielsweise kann die Widerstandsanordnung vier Widerstände aufweisen, insbesondere in Form einer aus den vier Widerständen gebildeten Widerstandskette. Grundsätzlich kann aber auch eine andere Zahl von Widerständen vorgesehen sein.

Ein Halbleiterschalter ist insbesondere als Metall-Oxid-Halbleiter-Feldeffekttransistor (MOSFET) ausgebildet. Selbstleitend bedeutet insbesondere, dass der Halbleiterschalter ohne eine äußere Ansteuerung, das heißt, ohne eine anliegende Gatespannung, in einem leitenden Zustand ist, in dem ein Strom zwischen Source- und Drainkontakt fließen kann. Selbstsperrend bedeutet insbesondere, dass der Halbleiterschalter ohne eine äußere Ansteuerung, das heißt, ohne eine anliegende Gatespannung, in einem sperrenden Zustand ist, in dem kein Strom zwischen Source- und Drainkontakt fließen kann. Grundsätzlich können auch andere Halbleiterschalter verwendet werden, sofern diese ohne äußere Ansteuerung selbstleitend bzw. selbstsperrend sein können.

Ein normaler Betriebszustand ist insbesondere ein Betriebszustand des Pulswechselrichters und/oder der Pulswechselrichteranordnung und/oder einer Einrichtung, in oder mit der die Pulswechselrichteranordnung betrieben wird, in dem ein Betrieb fehlerfrei ist.

Die Pulswechselrichteranordnung kann zusätzlich insbesondere auch einen Zwischenkreiskondensator umfassen. Ferner kann die Pulswechselrichteranordnung zusätzlich insbesondere auch Mittel zum Bereitstellen von Zwischenspannungen für den Pulswechselrichter bereitstellen, beispielsweise in Form eines Transformators mit an den Wicklungen abgreifbaren Zwischenspannungen.

Die Pulswechselrichteranordnung kann insbesondere in einem Fahrzeug, insbesondere in einem Kraftfahrzeug, verwendet werden.

Teile der Steuereinrichtung können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) oder feldprogrammierbares Gatterfeld (FPGA) ausgebildet sind. Es kann jedoch auch vorgesehen sein, dass die Steuereinrichtung ganz oder teilweise in analoger Schaltungstechnik ausgebildet ist.

In einer Ausführungsform ist vorgesehen, dass die Steuereinrichtung dazu eingerichtet ist, mehrere Eingangssignale logisch miteinander verknüpft zu verarbeiten und den mindestens einen selbstleitenden Halbleiterschalter nicht mehr sperrend zu schalten, wenn mindestens eines der mehreren Eingangssignale ein vorgegebenes Auslösekriterium erfüllt. Hierdurch können Zustände außerhalb des normalen Betriebszustands anhand von mehreren Eingangssignalen erkannt werden. Die logische Verknüpfung ist hierbei derart gewählt und/oder dazu eingerichtet, dass der mindestens eine selbstleitende Halbleiterschalter auch bei einem Ausfall der Logik und/oder der Steuereinrichtung stets in den leitenden Zustand übergeht.

In einer Ausführungsform ist vorgesehen, dass die Steuereinrichtung dazu eingerichtet ist, eine zwischen der Plusleitung und der Minusleitung erfasste Spannung mit einem Überspannungsschwellenwert zu vergleichen und bei Erreichen oder Überschreiten des Überspannungsschwellenwertes den mindestens einen selbstleitenden Halbleiterschalter nicht mehr sperrend zu schalten. Hierdurch kann eine Überspannung über den mindestens einen Widerstand der mindestens einen Widerstandsanordnung, insbesondere über ein zusammen mit einem Zwischenkreiskondensator gebildetes RC-Glied, gezielt begrenzt und/oder abgebaut werden. Die Pulswechselrichteranordnung kann hierdurch vor einer Beschädigung geschützt werden.

Es kann weiterbildend vorgesehen sein, dass die Steuereinrichtung dazu eingerichtet ist, eine Hystereseschaltung auszubilden und/oder bereitzustellen, wobei die Hystereseschaltung nach einem Erreichen oder Überschreiten des Überspannungsschwellenwertes dafür sorgt, dass nach Unterschreiten einer vorgegebenen Rücksetzspannungsschwelle der mindestens eine Halbleiterschalter wieder sperrend geschaltet wird.

In einer Ausführungsform ist vorgesehen, dass die Steuereinrichtung dazu eingerichtet ist, den mindestens einen selbstleitenden Halbleiterschalter zumindest außerhalb des normalen Betriebszustands zeitabhängig in einer vorgegebenen Weise anzusteuern. Hierdurch kann eine Belastung des mindestens einen Widerstands zeitlich begrenzt werden. Hierdurch können der mindestens eine Widerstand bzw. die mehreren Widerstände insgesamt kleiner ausgelegt sein. Dies reduziert Kosten und Bauraum (z.B. eine benötigte Leiterplattenfläche). Insbesondere kann vorgesehen sein, den mindestens einen selbstleitenden Halbleiterschalter gepulst anzusteuern, um zwischen einem leitenden und einem sperrenden Zustand hin und her zu schalten.

In einer Ausführungsform ist vorgesehen, dass die Pulswechselrichteranordnung mindestens eine weitere Widerstandsanordnung zwischen der Plusleitung und der Minusleitung und/oder zumindest teilweise parallel zu der mindestens einen Widerstandsanordnung mit mindestens einem Widerstand umfasst, wobei die mindestens eine weitere Widerstandsanordnung mindestens einen selbstsperrenden Halbleiterschalter aufweist, der dazu eingerichtet und derart angeordnet ist, eine über die mindestens eine weitere Widerstandanordnung und/oder zumindest teilweise über die mindestens eine Widerstandsanordnung zwischen der Plusleitung und der Minusleitung ausgebildete elektrische Verbindung zu schließen oder zu trennen, wobei die Steuereinrichtung ferner dazu eingerichtet ist, den mindestens einen selbstsperrenden Halbleiterschalter zumindest außerhalb des normalen Betriebszustands anzusteuern. Hierdurch kann ein Entladen eines Zwischenkreiskondensators und gegebenenfalls weiterer Kapazitäten verbessert werden, da ein weiterer Pfad zum Entladen bereitgestellt werden kann. Dies ermöglicht ein schnelleres Entladen einer Zwischenkreiskapazität und gegebenenfalls vorhandener weiterer Kapazitäten. Insbesondere kann eine Anzahl der zum Entladen verwendeten Widerstände erhöht werden, sodass die einzelnen Widerstände kleiner ausgelegt werden können, wodurch Kosten und Bauraum eingespart werden können.

In einer Ausführungsform ist vorgesehen, dass die Steuereinrichtung ferner dazu eingerichtet ist, den mindestens einen selbstleitenden Halbleiterschalter und den mindestens einen selbstsperrenden Halbleiterschalter derart anzusteuern, dass diese in zeitlich vorgegebener Weise leitend geschaltet werden. Insbesondere kann hierdurch ein Aufteilen einer Belastung bzw. einer anfallenden Verlustleistung erfolgen. In der Folge können die Widerstände kleiner ausgelegt werden, sodass Kosten und Bauraum eingespart werden können. Insbesondere kann vorgesehen sein, den mindestens einen selbstleitenden Halbleiterschalter und den mindestens einen selbstsperrenden Halbleiterschalter abwechselnd in einen leitfähigen Zustand zu schalten. Dies kann insbesondere in gepulster Form erfolgen. Hierbei kann beispielsweise vorgesehen sein, einen Leistungsfluss zeitlich im Verhältnis von 50 % zu 50 % aufzuteilen. Es können jedoch auch andere Verhältnisse vorgesehen sein, welche insbesondere von einer Anzahl und Auslegung der einzelnen Widerstände in der mindestens einen Widerstandsanordnung und der mindestens einen weiteren Widerstandsanordnung abhängig sein kann. Es kann jedoch gelten, dass die Zeiten, in denen der mindestens eine selbstleitende Halbleiterschalter und der mindestens eine selbstsperrende Halbleiterschalter leitend sind, insgesamt in der Summe 100 % nicht überschreiten, das heißt, dass die Halbleiterschalter insbesondere abwechselnd leitend geschaltet werden. Grundsätzlich ist jedoch auch eine Summe von >100 % möglich.

In einer Ausführungsform ist vorgesehen, dass die Steuereinrichtung als Eingangssignal zum Steuern des mindestens einen selbstleitenden Halbleiterschalters und/oder des mindestens einen weiteren selbstsperrenden Halbleiterschalters mindestens eines der folgenden Eingangssignale verwendet und/oder auswertet: ein Steuersignal eines Controllers des Pulswechselrichters, ein Steuersignal eines Co-Controllers des Pulswechselrichters, ein Fail-Safe-Ausgang von einem System Basic Chip des Pulswechselrichters mit einer Watchdog-Funktion, ein Überspannungserkennungssignal und/oder ein Unfallsignal (Crashsignal) einer Fahrzeugsteuerung. Grundsätzlich können jedoch alternativ oder zusätzlich auch andere Eingangssignale verwendet werden.

In einer weiterbildenden Ausführungsform ist vorgesehen, dass mindestens zwei Eingangssignale zum Steuern des mindestens einen selbstleitenden Halbleiterschalters und/oder des mindestens einen weiteren Halbleiterschalters verwendet werden. Hierdurch kann eine Redundanz geschaffen werden. Es kann dann beispielsweise möglich sein, auf einen Co-Prozessor zu verzichten, wodurch Kosten und Bauraum eingespart werden können.

In einer Ausführungsform ist vorgesehen, dass die Pulswechselrichteranordnung eine an der mindestens einen Widerstandsanordnung angeordnete zuschaltbare Spannungsmesseinrichtung umfasst. Dies ermöglicht es, eine an der mindestens einen Widerstandsanordnung abfallende Spannung zu erfassen und beispielsweise zu Diagnosezwecken auszuwerten und zu verwenden. Ein Zu- und Abschalten kann beispielsweise mittels eines Halbleiterschalters erfolgen. Durch die Verwendung zumindest eines Teils der mindestens einen Widerstandsanordnung zur Spannungsmessung können Bauteile eingespart werden, sodass Kosten und Bauraum reduziert werden können.

In einer weiterbildenden Ausführungsform ist vorgesehen, dass die Steuereinrichtung dazu eingerichtet ist, eine Funktion der mindestens einen Widerstandsanordnung durch Ansteuern des mindestens einen selbstleitenden Halbleiterschalters und Ansteuern und/oder Auslesen der Spannungsmesseinrichtung zu überprüfen. Hierdurch kann insbesondere eine Plausibilität überprüft werden. Hierzu werden der Reihe nach insbesondere verschiedene Schaltzustände des mindestens einen selbstleitenden Halbleiterschalters und der Zu- und Abschaltung der Spannungsmessung aktiviert. Nach dem jeweiligen Aktivieren wird jeweils überprüft, ob eine Spannung mittels der Spannungsmesseinrichtung erfasst werden kann oder nicht. Bei korrekter Funktionsweise ergibt sich dann die folgende Plausibilitätsmatrix, wobei beim Plausibilisieren jeweils eine einzelne Spalte der Matrix betrachtet wird:
0110
0011
0010

Hierbei gibt die erste Zeile in jeder Spalte einzelne Schaltzustände des mindestens einen selbstleitenden Halbleiterschalters an ("1" = leitend). Die zweite Zeile gibt in jeder Spalte die einzelnen Schaltzustände der Zu- und Abschaltung der Spannungsmesseinrichtung an ("1" = zugeschaltet) und die dritte Zeile gibt an, ob bei korrekter Funktionsweise eine Spannung mittels der Spannungsmesseinrichtung erfasst wird oder nicht. Nur bei einer korrekten Funktionsweise darf die Spannungsmesseinrichtung eine Spannung erfassen (Eintrag in der dritten Zeile = "1"), das heißt nur, wenn der mindestens eine Halbleiterschalter leitend ist ("1") und die Spannungsmesseinrichtung zugeschaltet ist ("1"). Die dritte Spalte entspricht diesem Zustand. Bei den drei anderen Kombinationen von Schaltzuständen des mindestens einen selbstleitenden Halbleiterschalters und der Zu- und Abschaltung der Spannungsmesseinrichtung darf hingegen keine Spannung erfasst werden (Spalten 1, 2 und 4, dort ist der Wert in der dritten Zeile "0"). Die Steuereinrichtung ist dann insbesondere dazu eingerichtet, das Vorliegen des jeweiligen Zustands der dritten Zeile der Plausibilitätsmatrix zu überprüfen, indem die Schaltzustände nacheinander spaltenweise gemäß dem jeweiligen Zustand in der ersten und der zweiten Zeile gesetzt werden und das Ergebnis einer Spannungsmessung anhand des zugehörigen Eintrags in der dritten Zeile überprüft wird (also: Spalte 1, dann Spalte 2, dann Spalte 3, dann Spalte 4). Die Reihenfolge, wie spaltenweise überprüft wird, kann hierbei auch anders sein.

In einer Ausführungsform ist vorgesehen, dass die Pulswechselrichteranordnung mindestens einen Versorgungsabgriff an der mindestens einen Widerstandsanordnung aufweist, wobei der mindestens eine Versorgungsabgriff dazu eingerichtet ist, Gatetreiber des Pulswechselrichters zumindest während einer Einschaltphase des Pulswechselrichters zu versorgen oder eine Versorgung zu aktivieren. Hierdurch können die Gatetreiber während einer Einschaltphase versorgt werden, ohne dass hierfür zusätzliche Bauteile notwendig sind. Durch die Verwendung zumindest eines Teils der mindestens einen Widerstandsanordnung zur Versorgung der Gatetreiber während der Einschaltphase können Bauteile und Bauraum eingespart werden.

Insbesondere wird ferner auch ein Fahrzeug geschaffen, umfassend mindestens eine Pulswechselrichteranordnung nach einer der beschriebenen Ausführungsformen. Das Fahrzeug ist insbesondere ein Kraftfahrzeug, insbesondere ein Hybrid- oder Elektrofahrzeug. Grundsätzlich kann das Fahrzeug aber auch ein anderes Land-, Wasser-, Schienen, Luft- oder Raumfahrzeug sein, beispielsweise eine Drohne oder ein Lufttaxi.

Weitere Merkmale zur Ausgestaltung des Verfahrens ergeben sich aus der Beschreibung von Ausgestaltungen der Pulswechselrichteranordnung. Die Vorteile des Verfahrens sind hierbei jeweils die gleichen wie bei den Ausgestaltungen der Pulswechselrichteranordnung.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Pulswechselrichteranordnung;
- Fig. 2: eine schematische Darstellung einer logischen Verknüpfung zur Ansteuerung des selbstleitenden Halbleiterschalters;
- Fig. 3: eine schematische Darstellung einer weiteren Ausführungsform der Pulswechselrichteranordnung;
- Fig. 4: eine schematische Darstellung einer logischen Verknüpfung zur Ansteuerung eines selbstsperrenden Halbleiterschalters einer Ausführungsform der Pulswechselrichteranordnung;
- Fig. 5: eine schematische Darstellung von weiteren Ausführungsformen der Pulswechselrichteranordnung.

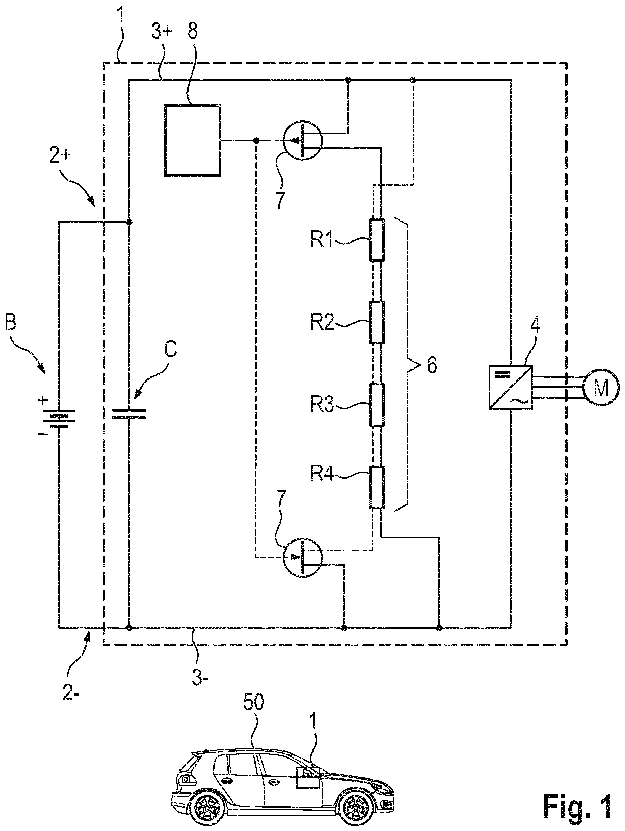

In Fig. 1 ist eine schematische Darstellung einer Ausführungsform der Pulswechselrichteranordnung 1 gezeigt. Es kann insbesondere vorgesehen sein, dass die Pulswechselrichteranordnung 1 in einem Fahrzeug 50 angeordnet und verwendet wird.

Die Pulswechselrichteranordnung 1 umfasst einen positiven Hochspannungseingang 2+ zum Versorgen einer über ein Schütz (nicht gezeigt) trennbaren Plusleitung 3+ aus einer Batterie B, einen negativen Hochspannungseingang 2- zum Versorgen einer ebenfalls über ein Schütz (nicht gezeigt) trennbaren Minusleitung 3- aus der Batterie B, einen Pulswechselrichter 4 zum Bereitstellen mindestens einer Wechselspannung aus einer über die Leitungen 3+, 3-bereitgestellten Gleichspannung. Der Pulswechselrichter 4 stellt in der dargestellten Ausführungsform ein dreiphasiges Drehfeld für eine elektrische Maschine M bereit. Der Pulswechselrichter 4 wird hierzu mit der Gleichspannung gespeist, die von den Leitungen 3+, 3-bereitgestellt wird. Zwischenspannungen, die beispielsweise von einem Transformator (nicht gezeigt) mit Zwischenabgriffen bereitgestellt wird, versorgen eine Logik und Ansteuerspannungen von Gatetreibern des Pulswechselrichters 4.

Die Pulswechselrichteranordnung 1 weist eine Widerstandsanordnung 6 zwischen der Plusleitung 3+ und der Minusleitung 3- auf. Die Widerstandsanordnung 6 weist in dem gezeigten Beispiel vier in Reihe geschaltete Widerstände R1, R2, R3, R4 auf. Zwischen den Widerständen R1, R2, R3, R4 und der Plusleitung 3+ oder zwischen den Widerständen R1, R2, R3, R4 und der Minusleitung ist ein selbstleitender Halbleiterschalter 7, beispielsweise ein selbstleitender MOSFET, angeordnet, wobei jeweils nur eine der beiden Möglichkeiten ausgebildet ist. Mittels des selbstleitenden Halbleiterschalters 7 kann eine über die mindestens eine Widerstandanordnung 6 zwischen der Plusleitung 3+ und der Minusleitung 3- ausgebildete elektrische Verbindung geschlossen oder geöffnet werden.

Der selbstleitende Halbleiterschalter 7 wird mittels einer Steuereinrichtung 8 über einen Gatekontakt angesteuert. Die Steuereinrichtung 8 ist dazu eingerichtet, zumindest in einem normalen Betriebszustand, in dem kein Fehler vorliegt, den selbstleitenden Halbleiterschalter 7 sperrend zu schalten. Hierdurch wird die elektrische Verbindung der in Reihe geschalteten Widerstände R1, R2, R3, R4 von der Plusleitung 3+ bzw. von der Minusleitung 3- getrennt, sodass keine (Verlust-)Leistung über die Widerstände R1, R2, R3, R4 fließen kann. In einem Zustand außerhalb des normalen Betriebszustands, beispielsweise einem Fehlerzustand, bei dem eine elektrische Verbindung zwischen einer Batterie B und den Hochspannungseingängen 2+, 2-, insbesondere mittels eines Schützes (nicht gezeigt), bereits getrennt wurde, wird der selbstleitende Halbleiterschalter 6 entweder durch aktives Wegschalten einer Gatespannung mittels der Steuereinrichtung 8 oder passiv durch Wegfall der Gatespannung leitend geschaltet, sodass eine elektrische Verbindung zwischen den Widerständen R1, R2, R3, R4 der Widerstandsanordnung 6 ausgebildet wird und eine Zwischenkreiskapazität C (sowie gegebenenfalls vorhandene weitere Kapazitäten) kontrolliert entladen werden kann.

Es kann vorgesehen sein, dass die Steuereinrichtung 8 dazu eingerichtet ist, den selbstleitenden Halbleiterschalter 6 zumindest außerhalb des normalen Betriebszustands zeitabhängig in einer vorgegebenen Weise anzusteuern. Beispielsweise kann eine pulsförmige Ansteuerung erfolgen, bei der der selbstleitende Halbleiterschalter 6 gepulst leitend bzw. sperrend geschaltet wird.

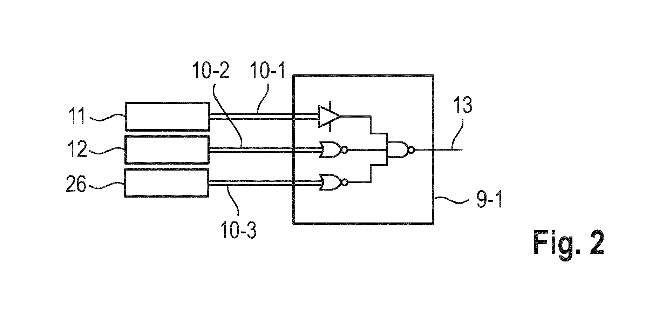

In Fig. 2 ist eine schematische Darstellung einer logischen Verknüpfung 9-1 zur Ansteuerung des selbstleitenden Halbleiterschalters 7 (Fig. 1) gezeigt. Es ist vorgesehen, dass die Steuereinrichtung dazu eingerichtet ist, mehrere Eingangssignale 10-1, 10-2, 10-3 logisch miteinander verknüpft zu verarbeiten und den selbstleitenden Halbleiterschalter 7 (Fig. 1) nicht mehr sperrend zu schalten, wenn mindestens eines der mehreren Eingangssignale 10-1, 10-2, 10-3 ein vorgegebenes Auslösekriterium erfüllt. Das Ansteuern des selbstleitenden Halbleiterschalters 7 erfolgt über ein entsprechend bereitgestelltes Signal am Ausgang 13.

Es ist insbesondere vorgesehen, dass die Steuereinrichtung dazu eingerichtet ist, eine zwischen der Plusleitung und der Minusleitung erfasste Spannung mit einem Überspannungsschwellenwert zu vergleichen und bei Erreichen oder Überschreiten des Überspannungsschwellenwertes den mindestens einen selbstleitenden Halbleiterschalter 7 (Fig. 1) nicht mehr sperrend zu schalten. In der gezeigten Darstellung liefert eine solche Überspannungserkennung 11 das Eingangssignal 10-1.

Das Eingangssignal 10-2 kann beispielsweise von einem Controller 12 des Pulswechselrichters 4 (Fig. 1) geliefert werden. Beispielsweise kann mittels des Eingangssignals 10-2 ein Betriebszustand des Controllers 12 bereitgestellt werden. Weitere Eingangssignale 10-3 können von verschiedenen Einrichtungen bereitgestellt werden, beispielsweise von einer Unfallerkennung 26.

Die logische Verknüpfung 9-1 umfasst im gezeigten Beispiel einen Operationsverstärker, zwei NOR-Gatter und ein NAND-Gatter, kann grundsätzlich aber je nach Anwendungsfall auch anders ausgebildet sein.

Die in der Fig. 2 gezeigte logische Verknüpfung 9-1 ist lediglich beispielhaft und kann grundsätzlich auch anders ausgestaltet sein.

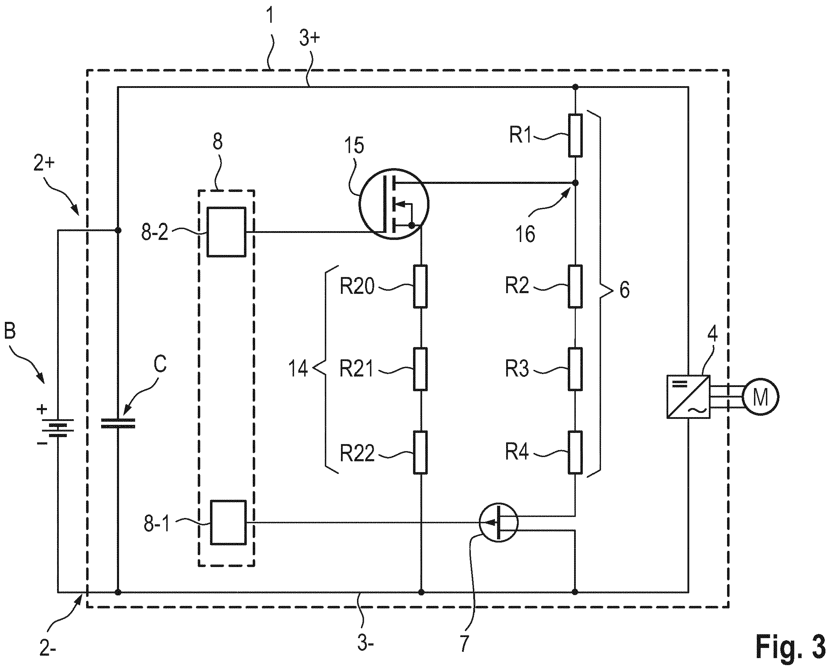

In Fig. 3 ist eine schematische Darstellung einer weiteren Ausführungsform der Pulswechselrichteranordnung 1 gezeigt. Die Pulswechselrichteranordnung 1 ist grundsätzlich wie die in der Fig. 1 gezeigte Ausführungsform ausgebildet, gleiche Bezugszeichen bezeichnen gleiche Merkmale und Begriffe.

Es ist in der gezeigten Ausführungsform zusätzlich vorgesehen, dass die Pulswechselrichteranordnung 1 eine weitere Widerstandsanordnung 14 zwischen der Plusleitung 3+ und der Minusleitung 3- und/oder zumindest teilweise parallel zu der mindestens einen Widerstandsanordnung 6 umfasst. Die weitere Widerstandsanordnung 14 umfasst in der gezeigten Ausführungsform drei in Reihe geschaltete Widerstände R20, R21, R22. Die weitere Widerstandsanordnung 14 weist ferner in diesem Beispiel einen selbstsperrenden Halbleiterschalter 15 auf (grundsätzlich kann der selbstsperrende Halbleiterschalter 15 auch auf der Seite der Minusleitung 3- angeordnet sein), der dazu eingerichtet und derart angeordnet ist, eine über die weitere Widerstandanordnung 14 und/oder zumindest teilweise über die Widerstandsanordnung 6 zwischen der Plusleitung 3+ und der Minusleitung 3- ausgebildete elektrische Verbindung zu schließen oder zu trennen. Die Steuereinrichtung 8 ist ferner dazu eingerichtet, den selbstsperrenden Halbleiterschalter 15 zumindest außerhalb des normalen Betriebszustands anzusteuern.

Insbesondere ist die weitere Widerstandsanordnung 14 in dem gezeigten Beispiel elektrisch mit einem Abgriff 16 zwischen den Widerständen R1 und R2 der Widerstandsanordnung 6 und mit der Minusleitung 3- verbunden. Der Abgriff 16 ist elektrisch mit dem selbstsperrenden Halbleiterschalter 15 verbunden, der selbstsperrende Halbleiterschalter 15 ist mit den Widerständen R20, R21, R22 verbunden. Grundsätzlich kann die weitere Widerstandsanordnung 14 aber auch anders ausgestaltet und elektrisch kontaktiert sein.

Zum Steuern des selbstleitenden Halbleiterschalters 7 (hier beispielhaft mit der Minusleitung 3-verbunden) und des selbstsperrenden Halbleiterschalters 15 weist die Steuereinrichtung 8 beispielsweise Module 8-1, 8-2 auf, in denen signaltechnisch jeweils eine logische Verknüpfung zum Ansteuern der Halbleiterschalter 7, 15 ausgebildet ist.

Es kann vorgesehen sein, dass die Steuereinrichtung 8 ferner dazu eingerichtet ist, den selbstleitenden Halbleiterschalter 7 und den selbstsperrenden Halbleiterschalter 15 derart anzusteuern, dass diese in zeitlich vorgegebener Weise leitend geschaltet werden. Insbesondere kann die Steuereinrichtung 8 die Halbleiterschalter 7, 15 in gepulster Weise abwechselnd leitend schalten. Hierdurch kann eine Belastung der einzelnen Widerstände Rx reduziert werden.

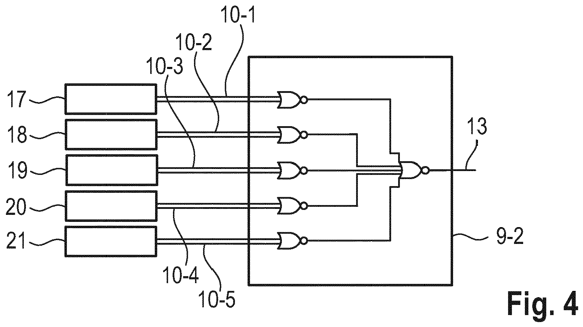

In Fig. 4 ist eine schematische Darstellung einer logischen Verknüpfung 9-2 zur Ansteuerung des selbstsperrenden Halbleiterschalters 15 (Fig. 3) gezeigt. Es ist vorgesehen, dass das Modul 8-2 der Steuereinrichtung 8 (Fig. 3) dazu eingerichtet ist, mehrere Eingangssignale 10-1, 10-2, 10-3, 10-4, 10-5 logisch miteinander verknüpft zu verarbeiten und den selbstsperrenden Halbleiterschalter 15 (Fig. 3) anzusteuern.

Es kann vorgesehen sein, dass die Steuereinrichtung 8 (Fig. 3) als Eingangssignal 10-x zum Steuern des mindestens einen selbstleitenden Halbleiterschalters und/oder des weiteren selbstsperrenden Halbleiterschalters 15 mindestens eines der folgenden Eingangssignale 10-x verwendet und/oder auswertet: ein Steuersignal eines Controllers 17 des Pulswechselrichters, ein Steuersignal eines Ko-Controllers 18 des Pulswechselrichters, ein Fail-Safe-Ausgang 19 von einem System Basic Chip mit einer Watchdog-Funktion, ein Überspannungserkennungssignal 20 und/oder ein Unfallsignal 21 einer Fahrzeugsteuerung eines Fahrzeugs. Die logische Verknüpfung 9-2 umfasst im gezeigten Beispiel NOR-Gatter, kann grundsätzlich aber je nach konkretem Anwendungsfall auch anders ausgebildet sein.

In einer weiterbildenden Ausführungsform ist vorgesehen, dass mindestens zwei Eingangssignale 10-x zum Steuern des selbstleitenden Halbleiterschalters 7 und/oder des weiteren Halbleiterschalters 15 (Fig. 3) verwendet werden. Hierdurch können an anderer Stelle Ressourcen eingespart werden. Beispielsweise kann durch eine derart erhöhte Redundanz ein Co-Controller 18 des Pulswechselrichters eingespart werden.

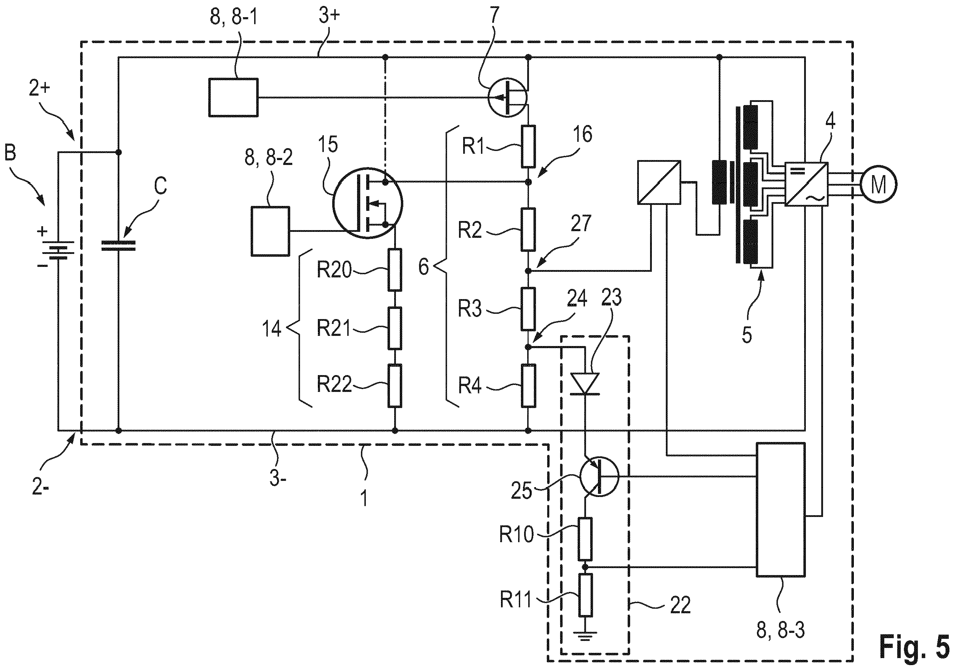

In Fig. 5 ist eine schematische Darstellung von weiteren Ausführungsformen der Pulswechselrichteranordnung 1 gezeigt. Die Pulswechselrichteranordnung 1 ist grundsätzlich wie die in der Fig. 1 oder Fig. 3 gezeigten Ausführungsformen ausgebildet, gleiche Bezugszeichen bezeichnen gleiche Merkmale und Begriffe. Die gezeigte Ausführungsform kann hierbei auch ohne die weitere Widerstandsanordnung 14 ausgebildet sein. Auch die Anordnung des selbstleitenden Halbleiterschalters 7 und des selbstsperrenden Halbleiterschalters 15 kann grundsätzlich anders sein, insbesondere können diese auch auf der Minusseite angeordnet sein (vgl. z.B. Fig. 1).

In der gezeigten Ausführungsform weist die Pulswechselrichteranordnung 1 eine an der Widerstandsanordnung 6 angeordnete zuschaltbare Spannungsmesseinrichtung 22 auf. Die Spannungsmesseinrichtung 22 umfasst in der gezeigten Ausführungsform eine dem Verpolschutz dienende Diode 23, welche mit einem Spannungsabgriff 24 zwischen den Widerständen R3, R4 und einem Emitter eines Bipolartransistors 25 verbunden ist. Der Bipolartransistor 25 ist kollektorseitig mit den Widerständen R10, R11 verbunden, welche in Reihe geschaltet mit GND einer Niedervoltversorgung verbunden sind. Eine Basis des Bipolartransistors 25 wird mittels eines hierfür vorgesehenen Moduls 8-3 der Steuereinrichtung 8 gesteuert. Nach Durchschalten des Bipolartransistors 25 (und des selbstleitenden Halbleiterschalters 7) fällt an dem Widerstand R11 eine Spannung ab. Die Spannung am Widerstand R11 wird zu Diagnosezwecken erfasst.

Weiterbildend kann vorgesehen sein, dass die Steuereinrichtung 8 dazu eingerichtet ist, eine Funktion der Widerstandsanordnung 6 durch Ansteuern des selbstleitenden Halbleiterschalters 7 und Ansteuern und/oder Auslesen der Spannungsmesseinrichtung 22 zu überprüfen. Hierzu wird insbesondere eine vorgegebene Plausibilitätsmatrix von Schaltzuständen überprüft. Hierzu werden der Reihe nach insbesondere verschiedene Schaltzustände des selbstleitenden Halbleiterschalters 7 und der über den Bipolartransistor 25 erfolgenden Zu- und Abschaltung der Spannungsmessung 22 aktiviert. Nach dem jeweiligen Aktivieren wird jeweils überprüft, ob eine Spannung mittels der Spannungsmesseinrichtung 22 erfasst werden kann oder nicht. Bei korrekter Funktionsweise ergibt sich dann die folgende Plausibilitätsmatrix:
0110
0011
0010

Die erste Zeile gibt spaltenweise die möglichen Schaltzustände des selbstleitenden Halbleiterschalters 7 an ("1" = leitend). Die zweite Zeile gibt spaltenweise die möglichen Schaltzustände des Bipolartransistor 25 an ("1" = leitend). Die dritte Zeile gibt spaltenweise an, ob eine Spannung erwartet wird ("1") oder nicht. Die korrekte Funktionsweise, d.h. eine Plausibilität, wird nun durch spaltenweises Einstellen der Schaltzustände an dem selbstleitenden Halbleiterschalter 7 und dem Bipolartransistor 25 und Vergleichen der nachfolgenden Spannungsmessung (Spannung gemessen oder nicht) überprüft. Nur wenn sowohl der selbstleitende Halbleiterschalter 7 als auch der Bipolartransistor 25 leitend geschaltet sind, darf an dem Widerstand R11 eine Spannung abfallen (vgl. Spalte 3), ansonsten nicht.

Es kann vorgesehen sein, dass die Pulswechselrichteranordnung 1 einen Versorgungsabgriff 27 an der Widerstandsanordnung 6 aufweist, wobei der Versorgungsabgriff 27 dazu eingerichtet ist, Gatetreiber des Pulswechselrichters 4 zumindest während einer Einschaltphase des Pulswechselrichters 4 über einen Transformator 5 zu versorgen oder eine Versorgung zu aktivieren. In dem gezeigten Beispiel befindet sich der Versorgungsabgriff 27 zwischen den Widerständen R2, R3 der Widerstandsanordnung 6. Grundsätzlich kann der Versorgungsabgriff 27 aber auch woanders angeordnet sein.

Neben einer Steigerung der Energieeffizienz aufgrund einer verringerten Verlustleistung können mit der in dieser Offenbarung beschriebenen Pulswechselrichteranordnung 1 auch Bauteile eingespart werden, sodass Kosten und Bauraum eingespart werden können.

Das Verfahren zum Betreiben einer Pulswechselrichteranordnung 1 wird insbesondere mittels einer der beschriebenen Ausführungsformen ausgeführt.

### Bezugszeichenliste

- 1: Pulswechselrichteranordnung
- 2+: positiver Hochspannungseingang
- 2-: negativer Hochspannungseingang
- 3+: Plusleitung
- 3-: Minusleitung
- 4: Pulswechselrichter
- 5: Transformator
- 6: Widerstandsanordnung
- 7: selbstleitender Halbleiterschalter
- 8: Steuereinrichtung
- 8-1: Modul
- 8-2: Modul
- 8-3: Modul
- 9-1: logische Verknüpfung
- 9-2: logische Verknüpfung
- 10-x: Eingangssignal
- 11: Überspannungssignal
- 12: Controller
- 13: Ausgang
- 14: weitere Widerstandsanordnung
- 15: selbstsperrender Halbleiterschalter
- 16: Abgriff
- 17: Controller
- 18: Co-Controller
- 19: Fail-Safe-Ausgang
- 20: Überspannungserkennungssignal
- 21: Unfallsignal
- 22: Spannungsmesseinrichtung
- 23: Diode
- 24: Spannungsabgriff
- 25: Bipolartransistor
- 26: Unfallerkennung
- 27: Versorgungsabgriff
- 50: Fahrzeug
- B: Batterie
- C: Zwischenkreiskapazität
- M: elektrische Maschine
- Rx: Widerstand

## Patentansprüche

1. Pulswechselrichteranordnung (1), umfassend:
einen positiven Hochspannungseingang (2+) zum Versorgen einer Plusleitung (3+),
einen negativen Hochspannungseingang (2-) zum Versorgen einer Minusleitung (3-),
einen Pulswechselrichter (4) zum Bereitstellen mindestens einer Wechselspannung aus einer über die Leitungen (3+,3-) bereitgestellten Gleichspannung,
mindestens eine Widerstandsanordnung (6) zwischen der Plusleitung (3+) und der Minusleitung (3-) mit mindestens einem Widerstand (Rx),
wobei die mindestens eine Widerstandsanordnung (6) mindestens einen selbstleitenden Halbleiterschalter (7) aufweist, der dazu eingerichtet und derart angeordnet ist, eine über die mindestens eine Widerstandanordnung (6) zwischen der Plusleitung (3+) und der Minusleitung (3-) ausgebildete elektrische Verbindung zu schließen oder zu trennen, und
eine Steuereinrichtung (8), wobei die Steuereinrichtung (8) dazu eingerichtet ist, zumindest in einem normalen Betriebszustand den mindestens einen selbstleitenden Halbleiterschalter (7) sperrend zu schalten.

2. Pulswechselrichteranordnung (1) nach Anspruch 1, **dadurch gekennzeichnet, dass** die Steuereinrichtung (8) dazu eingerichtet ist, mehrere Eingangssignale (10-x) logisch miteinander verknüpft zu verarbeiten und den mindestens einen selbstleitenden Halbleiterschalter (7) nicht mehr sperrend zu schalten, wenn mindestens eines der mehreren Eingangssignale (10-x) ein vorgegebenes Auslösekriterium erfüllt.

3. Pulswechselrichteranordnung (1) nach Anspruch 1 oder 2, **dadurch gekennzeichnet, dass** die Steuereinrichtung (8) dazu eingerichtet ist, eine zwischen der Plusleitung (3+) und der Minusleitung (3-) erfasste Spannung mit einem Überspannungsschwellenwert zu vergleichen und bei Erreichen oder Überschreiten des Überspannungsschwellenwertes den mindestens einen selbstleitenden Halbleiterschalter (7) nicht mehr sperrend zu schalten.

4. Pulswechselrichteranordnung (1) nach einem der vorangegangenen Ansprüche, **dadurch gekennzeichnet, dass** die Steuereinrichtung (8) dazu eingerichtet ist, den mindestens einen selbstleitenden Halbleiterschalter (7) zumindest außerhalb des normalen Betriebszustands zeitabhängig in einer vorgegebenen Weise anzusteuern.

5. Pulswechselrichteranordnung (1) nach einem der vorangegangen Ansprüche, **gekennzeichnet durch** mindestens eine weitere Widerstandsanordnung (14) zwischen der Plusleitung (3+) und der Minusleitung (3-) und/oder zumindest teilweise parallel zu der mindestens einen Widerstandsanordnung (6) mit mindestens einem Widerstand (Rx), wobei die mindestens eine weitere Widerstandsanordnung (14) mindestens einen selbstsperrenden Halbleiterschalter (15) aufweist, der dazu eingerichtet und derart angeordnet ist, eine über die mindestens eine weitere Widerstandanordnung (14) und/oder zumindest teilweise über die mindestens eine Widerstandsanordnung (6) zwischen der Plusleitung (3+) und der Minusleitung (3-) ausgebildete elektrische Verbindung zu schließen oder zu trennen, wobei die Steuereinrichtung (8) ferner dazu eingerichtet ist, den mindestens einen selbstsperrenden Halbleiterschalter (15) zumindest außerhalb des normalen Betriebszustands anzusteuern.

6. Pulswechselrichteranordnung (1) nach einem der vorangegangenen Ansprüche, **dadurch gekennzeichnet, dass** die Steuereinrichtung (8) zum Steuern des mindestens einen selbstleitenden Halbleiterschalters (7) und/oder des mindestens einen weiteren selbstsperrenden Halbleiterschalters (15) mindestens eines der folgenden Eingangssignale (10-x) verwendet und/oder auswertet: ein Steuersignal eines Controllers (17) des Pulswechselrichters (4), ein Steuersignal eines Co-Controllers (18) des Pulswechselrichters (4), ein Fail-Safe-Ausgang (19) von einem System Basic Chip des Pulswechselrichters (4) mit einer Watchdog-Funktion, ein Überspannungserkennungssignal (20) und/oder ein Unfallsignal (21) einer Fahrzeugsteuerung.

7. Pulswechselrichteranordnung (1) nach einem der vorangegangenen Ansprüche, **gekennzeichnet durch** eine an der mindestens einen Widerstandsanordnung (6) angeordnete zuschaltbare Spannungsmesseinrichtung (22).

8. Pulswechselrichteranordnung (1) nach Anspruch 7, **dadurch gekennzeichnet, dass** die Steuereinrichtung (8) dazu eingerichtet ist, eine Funktion der mindestens einen Widerstandsanordnung (6) durch Ansteuern des mindestens einen selbstleitenden Halbleiterschalters (7) und Ansteuern und/oder Auslesen der Spannungsmesseinrichtung (22) zu überprüfen.

9. Pulswechselrichteranordnung (1) nach einem der vorangegangenen Ansprüche, **gekennzeichnet durch** mindestens einen Versorgungsabgriff (27) an der mindestens einen Widerstandsanordnung (6), wobei der mindestens eine Versorgungsabgriff (27) dazu eingerichtet ist, Gatetreiber des Pulswechselrichters (4) zumindest während einer Einschaltphase des Pulswechselrichters (4) zu versorgen oder eine Versorgung zu aktivieren.

10. Verfahren zum Betreiben einer Pulswechselrichteranordnung (1),
wobei mindestens eine Widerstandsanordnung (6) mit mindestens einem Widerstand (Rx) zwischen einer von einem positiven Hochspannungseingang (2+) gespeisten Plusleitung (3+) und einer von einem negativen Hochspannungseingang (2-) gespeisten Minusleitung (3-) betrieben wird,
wobei mindestens ein selbstleitender Halbleiterschalter (7) der mindestens einen Widerstandsanordnung (6) zum Schließen oder Trennen einer über die mindestens eine Widerstandanordnung (6) zwischen der Plusleitung (3+) und der Minusleitung (3-) ausgebildeten elektrischen Verbindung betrieben wird, und
wobei der mindestens eine selbstleitende Halbleiterschalter (7) mittels einer Steuereinrichtung (8) der Pulswechselrichteranordnung (1) zumindest in einem normalen Betriebszustand sperrend geschaltet wird.
